# FASCICULE DE BREVET EUROPEEN

(11) **EP 1 793 139 B1**
(45) Date de publication et mention de la délivrance du brevet: **24.09.2008**
(21) Numéro de dépôt: 06291758.8
(22) Date de dépôt: 14.11.2006
(51) Int. Cl.: F16D 55/36

(54) **Frein électromécanique avec actionneurs ayant un débattement angulaire**
Elektromechanische Bremse mit winkelverstellbaren Aktuatoren
Electromechanical brake with angular displaceable actuators

(30) Priorité: 30.11.2005 FR 0512129
(43) Date de publication de la demande: 06.06.2007
(73) Titulaire: MESSIER-BUGATTI, 78140 Vélizy Villacoublay (FR)
(72) Inventeur: Perrault, Maurice, 78810 Davron (FR); Chico, Philippe, 92100 Boulogne Billancourt (FR)
(74) Mandataire: Parzy, Benjamin Alain

(56) Documents cités:
- EP-A- 0 583 947
- EP-A- 1 084 949
- US-A- 4 607 730
- US-B1- 6 336 534

## Description

L'invention concerne un frein électromécanique, notamment pour aéronef, avec actionneurs ayant un débattement angulaire.

### ARRIERE-PLAN DE L'INVENTION

On connaît des freins électromécaniques d'aéronef comportant un support dénommé couronne qui porte des actionneurs électromécaniques comportant chacun un poussoir déplaçable axialement en regard d'une pile de disques afin d'appliquer sélectivement un effort de freinage sur les disques.

En général, les actionneurs sont vissés directement sur le support, de sorte que la liaison entre le support et les actionneurs est rigide.

Or le support est susceptible de se déformer sous l'effet de l'application de l'effort de freinage, entraînant l'actionneur dans sa déformation. Le poussoir peut alors presser les disques selon une direction qui n'est pas perpendiculaire aux disques, de sorte que le poussoir subit un effort transverse. Or les actionneurs sont en général équipés de vis à billes ou vis à rouleaux qui supportent mal les efforts transverses.

L'état de la technique est notamment illustré par les documents US 4 607 730, US 6 336 534, EP 1 084 949 et EP 0 583 947.

### OBJET DE L'INVENTION

L'invention a pour objet un frein dans lequel le risque d'apparition d'un effort transverse sur le poussoir lors du freinage est réduit.

### BREVE DESCRIPTION DE L'INVENTION

En vue de la réalisation de ce but, on propose un frein électromécanique, notamment pour aéronef, comportant un support qui porte au moins un actionneur électromécanique comportant un poussoir déplaçable axialement en regard d'éléments de friction pour appliquer sélectivement un effort de freinage sur les éléments de friction, dans lequel selon l'invention l'actionneur est monté sur le support par l'intermédiaire d'un organe de liaison autorisant un débattement angulaire d'au moins une partie de l'actionneur portant le poussoir.

Ainsi, lorsque le poussoir vient au contact des disques, il se place de lui-même perpendiculairement aux disques sous l'effet de l'effort de freinage en jouant sur la liberté de débattement angulaire de l'actionneur. Puis, quelque soit l'intensité du freinage et les déformations du support, le poussoir continue à pousser perpendiculairement aux disques.

La liberté de débattement angulaire permet donc de réduire le risque d'un effort transverse sur le poussoir.

### BREVE DESCRIPTION DES DESSINS

L'invention sera mieux comprise à la lumière de la description qui suit en référence aux figures des dessins annexés parmi lesquelles :
- la figure 1 est une vue en coupe d'un frein électromécanique connu en soi ;
- la figure 2 est une vue de détail de la figure 1 lors d'une application d'un effort de freinage, les déformations étant fortement exagérées ;
- la figure 3 est une vue en coupe partielle d'un frein électromécanique selon un premier mode particulier de réalisation de l'invention ;
- la figure 4 est une vue de détail du frein de la figure 3 lors d'une application d'un effort de freinage;
- la figure 5 est une vue en coupe partielle d'un frein électromécanique selon un deuxième mode particulier de réalisation de l'invention.

### DESCRIPTION DETAILLEE DE L'INVENTION

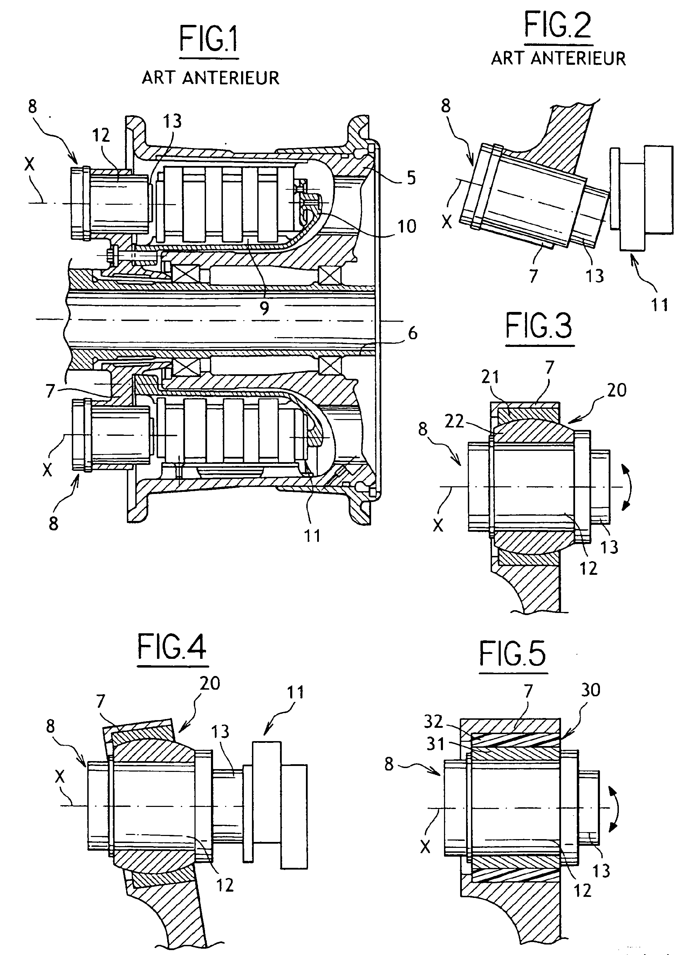

En référence à la figure 1, un frein d'aéronef est associé à une roue comportant une jante 5 montée pour tourner sur un essieu 6. Le frein comporte une couronne 7 montée sur l'essieu et arrêtée en rotation par rapport à celui-ci par des moyens non représentés. La couronne 7 porte des actionneurs électromécaniques 8 qui comportent chacun un boîtier 12 dans lequel un poussoir 13 est monté pour coulisser selon une direction axiale X et exercer sélectivement un effort de freinage sur une pile de disques 11 comportant des disques tournant avec la roue et, disposés alternativement, des disques immobilisés en rotation par un tube de torsion 9 solidaire de la couronne 7.

De façon connue en soi, le poussoir 13 est actionné par un moteur électrique de l'actionneur associé, le moteur étant agencé pour faire tourner l'un des éléments d'un système vis-écrou, par exemple du type à billes ou à rouleaux, le poussoir étant solidaire de l'autre des éléments du système. Un organe d'antirotation empêche le poussoir de tourner.

L'application d'un effort de freinage force les disques 11 à frotter les uns contre les autres de sorte qu'une partie de l'énergie cinétique de l'aéronef est dissipée en chaleur.

Comme cela est visible à la figure 2, l'effort exercé par les poussoirs 13 lors du freinage provoque, par réaction, une déformation de la couronne 7 dans le sens d'une flexion vers l'extérieur ayant tendance à déplacer l'axe X depuis sa position initiale vers une position oblique dans laquelle l'axe X n'est plus perpendiculaire aux disques, de sorte que le poussoir 13 subit des efforts transverses préjudiciables à la tenue du système vis-écrou de l'actionneur.

Selon un premier mode particulier de réalisation de l'invention illustré à la figure 3, on interpose entre la couronne 7 et l'actionneur 8 une rotule 20 comportant une cage 21 qui s'étend dans un logement adapté de la couronne 7 et une noix sphérique 22 montée autour du boîtier 12 de l'actionneur 8. Un dispositif d'anti-rotation non représenté empêche l'actionneur de tourner autour de l'axe X.

Ainsi, la couronne 7 se déforme progressivement au fur et à mesure de l'application de l'effort de freinage et l'actionneur se déverse progressivement grâce à la liberté de rotation donnée par le rotulage pour continuer à pousser sur les disques 11 selon une direction perpendiculaire aux disques comme le montre la figure 4. On évite ainsi la génération d'efforts transverses préjudiciables aux système vis/écrou de l'actionneur.

Selon un deuxième mode particulier de réalisation illustré à la figure 5, la rotule est remplacée par un palier composite 30 comportant une première bague métallique 31 s'étendant autour du boîtier 12 de l'actionneur 8, et une deuxième bague 32 en élastomère adhérant à la première bague 31 et reçue dans un logement adéquat de la couronne 7.

L'élastomère utilisé pour la deuxième bague 32 est un élastomère anisotrope agencé de sorte que la deuxième bague 32 soit substantiellement indéformable selon la direction axiale X mais déformable selon des directions radiales, de sorte qu'elle autorise un déversement angulaire de l'actionneur 8, mais également un léger déplacement radial de l'actionneur.

Ainsi, tout en assurant la transmission de l'effort de freinage (substantiellement axial) vers la couronne 7, la deuxième bague 32 permet un déplacement relatif de l'actionneur 8 vis à vis de la couronne 7 permettant au poussoir de rester substantiellement perpendiculaire aux disques.

De préférence, l'élastomère utilisé présente un amortissement important dans la plage de fréquences correspondant aux vibrations générées par le frottement des disques entre eux de sorte que l'actionneur 8 et la couronne 7 ne subissent pas l'intégralité desdites vibrations.

L'invention n'est pas limitée à ce qui vient d'être décrit, mais bien au contraire englobe toute variante entrant dans le cadre défini par les revendications.

En particulier, bien que l'on ait ici permis une liberté de débattement angulaire entre l'actionneur et le support de l'actionneur, on pourra se contenter de permettre cette liberté entre la partie de l'actionneur qui porte le poussoir et le support. Il convient alors que la liaison entre ladite partie de l'actionneur et le reste de l'actionneur puisse s'accommoder de cette liberté.

## Revendications

1. Frein électromécanique, notamment pour aéronef, comportant un support (7) qui porte au moins un actionneur électromécanique (8) comportant un poussoir (13) déplaçable axialement en regard d'éléments de friction (11) pour appliquer sélectivement un effort de freinage sur les éléments de friction, **caractérisé en ce que** l'actionneur est monté sur le support par l'intermédiaire d'un organe de liaison (20;30) autorisant un débattement angulaire d'au moins une partie de l'actionneur portant le poussoir.

2. Frein selon la revendication 1, dans lequel l'organe de liaison comprend une rotule (20).

3. Frein selon la revendication 1, dans lequel l'organe de liaison comporte un palier (30) substantiellement indéformable selon une direction axiale (X) et déformable selon des directions radiales.

4. Frein selon la revendication 3, dans lequel le palier (30) est agencé pour filtrer des vibrations en provenance des éléments de friction lors du freinage.

5. Frein selon la revendication 4, dans lequel le palier (30) est un palier composite comportant une bague (32) en matériau élastomère anisotrope

## Claims

1. An electromechanical brake, in particular for aircraft, the brake comprising a support (7) carrying at least one electromechanical actuator (8) comprising a pusher (13) that is axially displaceable towards friction elements (11) in order to apply a braking force to the friction elements, selectively, the brake being **characterized in that** the actuator is mounted on the support via a connection member (20; 30) allowing at least a portion of the actuator carrying the pusher to tilt angularly.

2. A brake according to claim 1, in which the connection member comprises a ball joint (20).

3. A brake according to claim 1, in which the connection member comprises a bearing (30) that is substantially undeformable in an axial direction (X) and that is deformable in radial directions.

4. A brake according to claim 3, in which the bearing (30) is arranged to filter vibration coming from the friction elements during braking.

5. A brake according to claim 4, in which the bearing (30) is a composite bearing including a bushing (32) made of anisotropic elastomer material.

## Patentansprüche

1. Elektromechanische Bremse, insbesondere für ein Flugzeug, umfassend einen Träger (7), der mindestens einen elektromechanischen Aktuator (8) trägt, der einen Stößel (13) umfasst, der gegenüber Reibelementen (11) axial verschiebbar ist, um selektiv eine Bremskraft auf die Reibelemente auszuüben, **dadurch gekennzeichnet, dass** der Aktuator an dem Träger über ein Verbindungselement (20; 30) angebracht ist, das eine Winkelversetzung mindestens eines Teils des den Stößel tragenden Aktuators gestattet.

2. Bremse nach Anspruch 1, wobei das Verbindungselement ein Kugelgelenk (20) umfasst.

3. Bremse nach Anspruch 1, wobei das Verbindungselement ein Lager (30) umfasst, das im Wesentlichen in axialer Richtung (X) nicht verformbar und in radialen Richtungen verformbar ist.

4. Bremse nach Anspruch 3, wobei das Lager (30) so ausgebildet ist, dass es beim Bremsen von den Reibelementen herrührende Schwingungen dämpft.

5. Bremse nach Anspruch 4, wobei das Lager (30) ein Verbundlager ist, das einen Ring (32) aus einem anisotropen, elastomeren Material umfasst.
